(19) Europäisches Patentamt
European Patent Office
Office européen des brevets

(11) **EP 1 304 660 A2**

(12) **EUROPÄISCHE PATENTANMELDUNG**

(43) Veröffentlichungstag:
**23.04.2003 Patentblatt 2003/17**

(51) Int Cl.[7]: **G07C 9/00**

(21) Anmeldenummer: **02018832.2**

(22) Anmeldetag: **23.08.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **18.10.2001 DE 10151521**

(71) Anmelder: **DaimlerChrysler AG**
**70567 Stuttgart (DE)**

(72) Erfinder:
• **Hüls, Helmut**
**71409 Schwaikheim (DE)**
• **Reinhardt, Matthias**
**71067 Sindelfingen (DE)**

(54) **Fahrzeugsicherungssystem**

(57) Für eine besonders störungsfreie Funkübertragung ist erfindungsgemäß ein Fahrzeugsicherungssystem (1) mit einem Zugangssteuerteil (4) und mit mindestens einem Authentikationselement (2) vorgesehen, die zum Austausch eines anhand von Frequenzumtastung modulierten Signals (S) einen Kommunikationskanal (6) aufweisen, wobei empfangsseitig mindestens zwei Empfänger (8a, 8b) zum getrennten Empfang von zwei die Frequenzumtastung repräsentierenden Frequenzen ($f_{ma}$, $f_{mb}$) des Signals (S) vorgesehen sind.

FIG 1

EP 1 304 660 A2

**Beschreibung**

Die Erfindung betrifft ein Fahrzeugsicherungssystem mit einem fahrzeugseitigen Zugangssteuerteil und mit mindestens einem mobilen nutzerseitigen Authentikationselement.

Fahrzeugsicherungssysteme in Form sogenannter schlüsselloser Mittel (auch "Keyless-Go"-Systeme genannt) oder von Funkfernbedienungen (auch Funkschließung genannt) sind verschiedentlich bekannt. Bei ihnen erfolgt die Authentikation, d.h. die Berechtigungsprüfung, üblicherweise unter Verwendung tragbarer, handhabungsfreier Authentikationslemente, wobei unter dem Begriff "handhabungsfrei" vorliegend die Tatsache zu verstehen ist, dass das betreffende Authentikationselement für die Durchführung des Authentikationsvorgangs über den drahtlosen Kommunikationskanal vom Nutzer nicht gehandhabt, sondern lediglich mitgeführt und in den Wirkbereich dieses Kommunikationskanals gebracht werden muss.

Unter dem Begriff "Wirkbereich" ist dabei derjenige Bereich zu verstehen, in welchem sich das Authentikationselement befinden muss, damit ein ausgelöster Zugangsberechtigungsprüfvorgang auch tatsächlich durchgeführt wird. Dieser Wirkbereich ist z.B. durch die wirksame Reichweite fahrzeugseitiger Antennen dieses Kommunikationskanals definiert und wird auch als Fangbereich bezeichnet. Das Auslösen einer jeweiligen Zugangsberechtigungsprüfung erfolgt beim vorliegenden System nicht schon selbsttätig allein beim Eintritt des Authentikationselements in den Kommunikationswirkbereich, sondern erst auf Benutzeranforderung hin, wozu ein entsprechendes, benutzeransprechbares Auslöseelement vorgesehen ist.

Beispielsweise dient ein drahtloser Authentikationskommunikationsvorgang zum automatischen Entsichern eines oder mehrerer Fahrzeugschließelemente, z.B. von Fahrzeugtüren oder Heckedeckel. Dabei ist in einem Nahfeldsystem ein drahtloser Authentikationskommunikationskanal vorgesehen, bei dem das Authentikationsmittel, z.B. in Form eines Transponders oder einer Chipkarte, in den Nahfeldbereich einer fahrzeugseitigen Sende- und/oder Empfangseinheit oder funktionell äquivalent umgekehrt die fahrzeugseitige Sende- und/oder Empfangseinheit mit ihrem Wirkbereich in die Nähe des Authentikationselements gebracht werden muß, wobei sich der Wirkbereich dieser Systeme typischerweise über höchstens einige Zentimeter erstreckt. Eine derartige elektronische Wegfahrsperre ist in der Offenlegungsschrift EP 0 767 091 A1 beschrieben. Ein weiterer Typ beinhaltet einen elektronischen Schlüssel als Authentikationselement, an dem das Auslöseelement zum Auslösen von zugangsberechtigungsprüfenden und/oder fahrberechtigungsprüfenden Kommunikationsvorgängen angeordnet ist, siehe beispielsweise in den Patentschriften DE 195 24 689 C1 und DE 195 31 219 C1. Für den oder die Authentikationskommunikationskanäle wird häufig ein zugelassenes Frequenzband um 433 MHz benutzt, siehe Patentschrift DE 196 12 452 C1.

Aufgrund zunehmender Belegung von Funkfrequenzen durch unterschiedliche Systeme werden Frequenzen mehrfach von unterschiedlichen Nutzer und Geräten gleichzeitig belegt. Dadurch kommt es zu Kollisionen, wobei sich hier ein Sender mit der stärkeren Empfangsleistung am Empfänger durchsetzen kann. Im Fall der Funkschließung kann das genutzte Frequenzband oder der Authentikationskommunikationskanal von 433,92 MHz $\pm$ 900 kHz bei Sendeleistungen bis 10mW praktisch von jeder beliebigen Anwendung ohne Lizenz genutzt werden. So nutzen beispielsweise drahtlose Kopfhörer, Registrierkassen, Alarmanlagen dieses Frequenzband. Aufgrund des begrenzten Bauraums des Funkschlüssels oder des Authentikationsmittels ist eine Ausschöpfung der gesetzlich zulässigen Sendeleistung nicht möglich. Dabei beträgt die Sendeleistung des Funkschlüssels üblicherweise 10 $\mu$W und liegt damit deutlich unter den anderen Anwendungen. Somit kommt es bedingt durch die Verwendung dieses Frequenzbandes durch weitere Anwendungen zu Störungen in der Übertragung vom Authentikationsmittel zum Fahrzeug und umgekehrt. Im schlechtesten Fall bleibt die Funkfernbedienung oder das Keyless-Go-System ohne Funktion.

Der Erfindung liegt daher die Aufgabe zugrunde, ein Fahrzeugsicherungssystem anzugeben, bei welchem die Funkübertragung trotz Störungen sicher ausgeführt werden kann.

Die Aufgabe wird erfindungsgemäß gelöst durch die Merkmale des Anspruchs 1. Beim Fahrzeugsicherungssystem mit einem, insbesondere fahrzeugseitigen, Zugangssteuerteil und mit mindestens einem, insbesondere mobilen nutzerseitigen, Authentikationselement, die zum Austausch eines anhand von Frequenzumtastung modulierten Signals einen Kommunikationskanal aufweisen, sind erfindungsgemäß empfangsseitig mindestens zwei Empfänger zum getrennten Empfang von zwei die Frequenzumtastung repräsentierenden Frequenzen des Signals vorgesehen. Aufgrund einer daraus resultierenden redundanten Signalübertragung und -auswertung ist eine hohe Sicherheit bei der Datenübertragung gegeben. Hierdurch ist sichergestellt, dass bei der Datenübertragung oder beim Signalaustausch zwischen dem Zugangssteuerteil und dem Authentikationselement Störungen durch andere - fremde - Funkdienste sicher vermieden sind. Insbesondere ist das Fahrzeugsicherungssystem durch Aussendung von zwei Frequenzen des Signals und deren Empfang mittels getrennter Empfänger besonders zuverlässig und bediensicher ausgeführt. Dabei ist das Fahrzeugsicherungssystem hinsichtlich des Bauraums besonders einfach ausgebildet.

Zweckmäßigerweise weisen die beiden Empfänger zueinander spiegelsymmetrische Mittenfrequenzen auf. Dabei sind die Mittenfrequenzen derart vorgegeben, dass diese die bei einer FSK-Modulation (FSK = Frequenzumtastung) auftretenden Frequenzen des Signals in etwa entsprechen. Mit anderen Worten: Die Mittenfrequenz $f_{mitte}$ des Signals und die aus dem Frequenzhub oder der Frequenzumtastung resultierenden Frequenzen $f_{mitte} + f_{hub}$ (auch

High-Signal genannt), $f_{mitte} - f_{hub}$ (auch Low-Signal genannt) dienen der Bestimmung der Mittenfrequenzen $f_m$ der beiden Empfänger gemäß:

Empfänger 1: $f_m = f_{mitte} + f_{hub}$, Empfang von Daten;

Empfänger 2: $f_m = f_{mitte} - f_{hub}$, Empfang von invertierten Daten;

mit $f_m$ = Mittenfrequenz des betreffenden Empfängers, $f_{mitte}$ = Mittenfrequenz des zu übertragenden Signals, $f_{hub}$ = Frequenzumtastung.

In einer weiteren bevorzugten Ausführungsform ist sendeseitig ein Signalgenerator zur mehrfachen FSK-Modulation des Signals vorgesehen. Alternativ kann das Signal AM-, ASK-moduliert oder beliebig anders moduliert werden. Dabei werden parallel oder seriell weitere Modulationen des Signals erzeugt. Je nach Vorgabe können sich die Modulationsarten voneinander unterscheiden. Bevorzugt wird für alle Modulationen dieselbe Modulationsart, insbesondere die FSK-Modulation, verwendet. Dabei erzeugt der Signalgenerator sendeseitig das Signal in einem Frequenzband vorzugsweise mehrfach. Hierdurch ist sichergestellt, dass bei einer derartigen mehrfachen Übertragung des Signals in einem Frequenzband der Einfluss von Störsignalen, z.B. Signalen anderer Funkdienste, reduziert ist. Die Zuverlässigkeit der Signalübertragung wird dadurch deutlich gesteigert.

Alternativ oder zusätzlich erzeugt der Signalgenerator das Signal in mehreren Frequenzbändern mehrfach. Dies stellt eine nochmalige Verbesserung der Zuverlässigkeit und Störfestigkeit der Kommunikationsverbindung dar. Für eine mehrfache Übertragung in mehreren Frequenzbändern umfasst der Signalgenerator zweckmäßigerweise einen Frequenzumtaster und mindestens zwei Frequenzmischer. Dies stellt eine besondere einfache und in vorhandene Schlüssel leicht nachrüstbare Ausführungsform dar. Empfangsseitig sind vorteilhafterweise eine der Anzahl der FSK-Modulationen des Signals entsprechende Anzahl von Demodulatoren vorgesehen. Die Anzahl der Demodulatoren bzw. der Frequenzmischer wird bestimmt durch die vorgegebene Anzahl der parallel zu übertragenden Signale. Mit anderen Worten: In Abhängigkeit von der Anzahl der redundanten Signale steigt der Grad der Störfestigkeit und der Zuverlässigkeit an.

Zur Erzeugung einer weitgehend homogenen Rundumcharakteristik des Fahrzeugssicherungssystems, auch Funkschließanlage genannt, ist empfangsseitig ein Mittel zur Laufzeitmessung vorgesehen. Dabei wird die auf eine nicht ideale Antennenposition zurückzuführende inhomogene Rundumcharakteristik anhand einer Laufzeitmessung zwischen Zugangssteuerteil (auch fahrzeugseitiger Empfänger genannt) und nutzerseitigem Authentikationselement, auch nutzerseitiger Schlüssel genannt, weitgehend eliminiert. Für eine ausreichende Übertragungsempfindlichkeit wird die maximale Reichweite mit Laufzeitmessung bevorzugt entsprechend der geringsten Reichweite ohne Laufzeitmessung gewählt und eingestellt. Das Mittel zur Laufzeitmessung umfaßt zweckmäßigerweise ein Mittel zur FFT-Analyse (FFT = Fast Fourier Transformation) eines ZF-Signals mit einem Analog-/Digital-Wandler und einem DSP-Modul (DSP = digital signal processing, auch digitaler Signalprozessor genannt).

Alternativ oder zusätzlich sind empfangsseitig zwei Antennen vorgesehen. Zur Erzielung einer Rundumcharakteristik ist dabei die erste Antenne nicht phasenstarr mit der zweiten Antenne gekoppelt. Durch eine derartige Antennendiversity werden Empfangslöcher ausgeblendet. Dadurch wird die Rundumcharakteristik homogener und Empfangslöcher, aufgrund Mehrwegeausbreitung, stark reduziert. Bevorzugt sind die Antennen zueinander gegenüberliegend, beispielsweise an gegenüberliegenden Fahrzeugseiten, angeordnet.

Die mit der Erfindung erzielten Vorteile bestehen insbesondere darin, dass eine sichere Datenübertragung auch dann noch gewährleistet ist, wenn Störsignale im Nutzband auftreten. Überdeckt beispielsweise ein Störer eine Hälfte des FSK-Spektrums, so ist ein Empfänger blockiert und empfängt keine Daten, der zweiter Empfänger kann jedoch die redundant übertragenen Daten empfangen. Darüber hinaus wird mittels einer Laufzeitmessung eine möglichst hohe Übertragungsempfindlichkeit bei einer möglichst homogenen Rundcharakteristik erzielt. Hierdurch ist ein möglichst guter Wirkbereich für den Kommunikationskanal gegeben.

Ausführungsbeispiele der Erfindung werden anhand einer Zeichnung näher erläutert. Darin zeigen:

FIG 1 schematische Darstellung eines Fahrzeugsicherungssystems,

FIG 2 schematische Darstellung eines Sendespektrums eines Authentikationselements,

FIG 3A bis 3D schematische Darstellung des Sendespektrums und eines zugehörigen Empfangsspektrums eines fahrzeugseitigen Zugangssteuerteils,

FIG 4 schematische Darstellung eines Sendespektrums für eine Mehrfachübertragung im Kommunikationskanal,

FIG 5 schematische Darstellung eines Authentikationselements für eine Mehrfachübertragung,

FIG 6 schematische Darstellung des Sendespektrums nach Figur 4 und eines zugehörigen Empfangsspektrums,

FIG 7 schematische Darstellung eines fahrzeugseitigen Zugangssteuerteils für eine Mehrfachübertragung im Kommunikationskanal,

FIG 8        schematische Darstellung einer Rundcharakteristik mit und ohne Laufzeitmessung und

FIG 9        schematische Darstellung eines fahrzeugseitigen Zugangssteuerteil mit Laufzeitmessung.

Einander entsprechende Teile sind in allen Figuren mit den gleichen Bezugszeichen versehen.

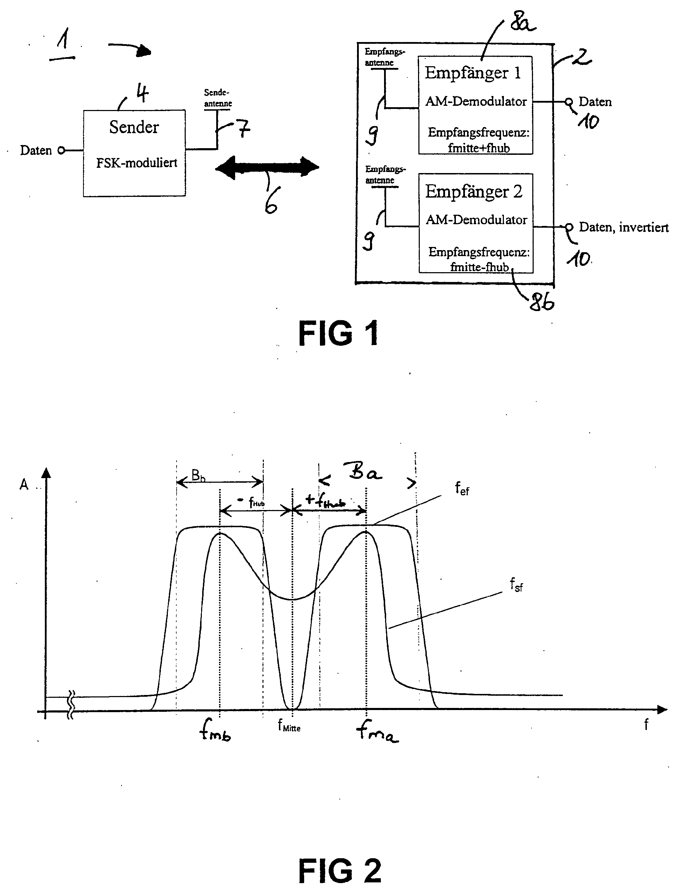

Figur 1 zeigt ein Fahrzeugsicherungssystem 1, welches ein mobiles nutzerseitiges Authentikationselement 2, auch Funkschlüssel genannt, und ein fahrzeugseitiges Zugangssteuerteil 4, auch Empfänger genannt, umfaßt. Je nach Art des Fahrzeugssicherungssystems 1 kann das Zugangssteuerteil 4 mobil und nutzerseitig sowie das Authentikationselement 2 fahrzeugseitig ausgebildet sein.

Zur Verbesserung der Störfestigkeit von mittels des Authentikationselements 2 und des Zugangssteuerteils 4 auf einem Kommunikationskanal 6 ausgeführten Funkschließungen oder -öffnungen an einem Fahrzeug wird ein anhand von Frequenzumtastung moduliertes Signal S (auch FSK-Modulation genannt) auf dem Kommunikationskanal 6 ausgetauscht. Hierzu wird sendeseitig mittels des Authentikationselements 2 das Datensignal D durch Frequenzumtastung moduliert und mittels einer Sendeantenne 7 übertragen. Aus der Modulation resultierende Teilsignale mit die Frequenzumtastung repräsentierenden Frequenzen $f_{ma}$, $f_{mb}$ mit $f_{ma} = f_{mitte}+f_{hub}$ und $f_{mb} = f_{mitte}-f_{hub}$ werden empfangsseitig mittels zwei Empfänger 8a, 8b über zugehörige Empfangsantennen 9 getrennt voneinander empfangen. Dabei werden die dem Signal S zugrundeliegenden Informationen oder Daten D mittels der Frequenzumtastung redundant auf den betreffenden Frequenzen $f_{mitte}+f_{hub}$ bzw. $f_{mitte}-f_{hub}$ übertragen. Die beiden Frequenzen $f_{ma}$, $f_{mb}$ weisen zur Trägerfrequenz $f_{mitte}$ bevorzugt einen derartig großen Frequenzhub $f_{hub}$ auf, dass ein getrennter Empfang ermöglicht ist. Bevorzugt beträgt der Frequenzhub $f_{hub}$ mindestens 10 kHz.

Die Informationen oder Daten D sind durch ein digitales, binäres Signal gebildet, das die Werte 0 und 1 mit den Pegeln L (Low) und H (High) aufweist. Zur Übertragung der Daten D wird eine hochfrequente Trägerschwingung mit diesen Daten D moduliert, beispielsweise anhand der Frequenzumtastung.

Beim Betrieb des Fahrzeugsicherungssystems 1 werden die im mobilen nutzerseitigen Sender oder Authentikationselement 2 gespeicherten Daten D zum fahrzeugseitigen Zugangssteuerteil 4 oder Empfänger übertragen. Anhand der übermittelten Daten D wird dem Fahrzeug die Berechtigung des Authentikationselements 2 und ggf. die gewünschte Aktion, z.B. "Fahrzeug öffnen" oder "Fahrzeug schließen", übergeben.

Das Sendespektrum des vom Authentikationselement 2 ausgesendeten FSK-modulierten Signals S mit den zugehörigen Teilsignalen für die betreffenden Frequenzen $f_{ma} = f_{mitte}+f_{hub}$ bzw. $f_{mb} = f_{mitte}-f_{hub}$ ist in Figur 2 dargestellt. Dabei weisen die beiden Empfänger 8a und 8b in etwa die gleich Bandbreite Ba, Bb und zueinander spiegelsymmetrische Mittenfrequenzen $f_{ma} = f_{mitte}+f_{hub}$ bzw. $f_{mb} = f_{mitte}-f_{hub}$ auf. Jeder der beiden Empfänger 8a, 8b empfängt somit als Teilsignale je eine Hälfte des FSK-modulierten Signals S. Dabei umfassen die beiden Teilsignale jeweils die gleichen Daten D in invertierter bzw. nicht invertierter Form. D.h. die Amplitude der Spektrallinien um die Mittenfrequenz $f_{ma} = f_{mitte}+f_{hub}$ weist ein invertiertes Verhalten bezüglich der Amplitude der Spektrallinien um die Mittenfrequenz $f_{mb} = f_{mitte}-f_{hub}$ auf. Dabei werden die dem Signal zugrundeliegenden Daten D anhand der gemessenen Amplitude $A_a$ oder $A_b$ und der zugehörigen Mittenfrequenz $f_{ma}$ bzw. $f_{mb}$ bestimmt. Am Ausgang 10 der Empfänger 8a, 8b werden die innerhalb der zugehörigen Bandbreite Ba bzw. Bb empfangenen Daten D ausgegeben, wobei ein Empfänger 8b die Daten in invertierter Form am Ausgang 10 ausgibt.

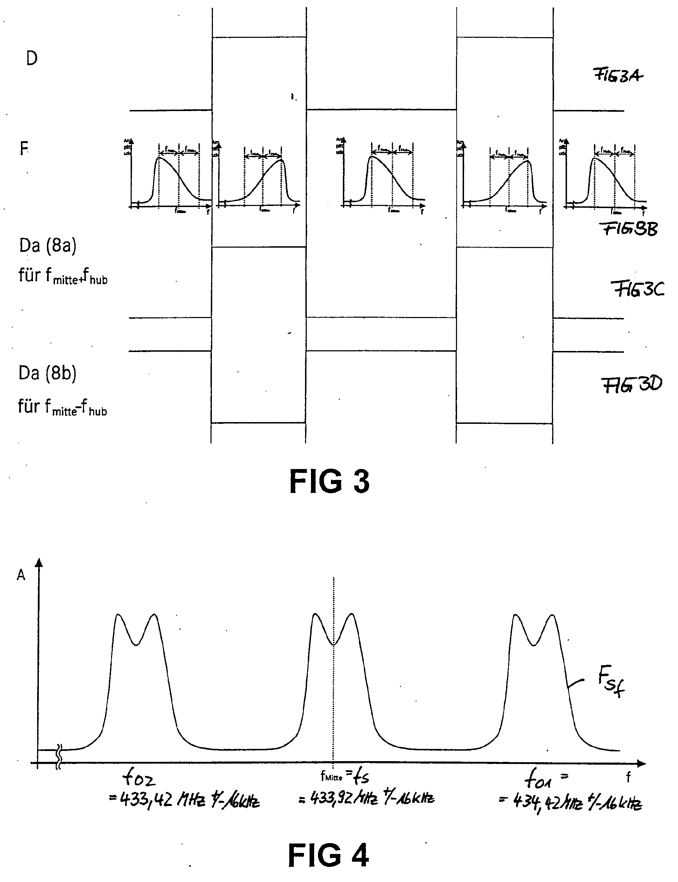

In den Figuren 3A bis 3D ist beispielhaft anhand einer schematischen Darstellung die prinzipielle Funktionsweise des mittels FSK-Modulation redundant ausgeführten Kommunikationskanals 6 dargestellt. Dabei ist in Figur 3A das Daten D enthaltende und vom Authentikationselement 2 gesendete Signal S und in Figur 3B das zugehörige Frequenzspektrum F und in den Figuren 3C und 3D das am betreffenden Ausgang des Empfängers 8a bzw. 8b anliegende Ausgangssignal $D_a$. Eine derartige redundante Übertragung des Signals S mittels FSK-Modulation ermöglicht eine besonders hohe Störfestigkeit. Dabei wird ein in einem Nutzband, d.h. in einem Band eines der Empfänger 8a oder 8b, auftretendes Störsignal sicher unterdrückt, indem das im anderen Nutzband übertragene Signal S störfrei im anderen Empfänger 8a bzw. 8b empfangen wird.

Zur weiteren Erhöhung der Datenübertragungssicherheit wird der Grad der Redundanz erhöht; indem bevorzugt sendeseitig das Signal S mehrfach FSK-moduliert wird. In Figur 4 ist beispielhaft ein Sendefrequenzspektrum F für eine Mehrfachübertragung im Kommunikationskanal 6 dargestellt. Dabei werden zusätzlich zur Basis- oder Grund-FSK-Modulation mindestens zwei weitere gleichartige FSK-Modulationen des Signals S parallel erzeugt.

Je nach Vorgabe wird dabei die Bandbreite B für das jeweils erzeugte FSK-modulierte Signal derart schmal gewählt, dass eine bezüglich Funkstörsignalen möglichst hohe Datenübertragungssicherheit des Nutzsignals S gegeben ist. Dabei wird die Bandbreite B in Abhängigkeit von mindestens zwei Parametern vorgegeben. Als ein erster Parameter wird bevorzugt das Verhältnis von Nutzsignal zu Störsignal verwendet. Dem liegt die Überlegung zugrunde, dass bei einer geringen oder schmalen Bandbreite B im Fall von sogenannten Breitbandstörsignalen ein Teil des Störspektrums herausgekoppelt oder "herausgeschnitten" wird, wodurch das Verhältnis von Nutzsignal zum Störsignal deutlich verbessert wird gemäß:

$$G \text{ [in dB]} = 10 \cdot \log \left( \frac{\textit{bisherige Bandbreite}}{\textit{neue Bandbreite}} \right) \qquad [1]$$

mit G= Gewinn an Störunempfindlichkeit.

Als ein zweiter Parameter wird die Wahrscheinlichkeit P des Auftretens eines Störsignals innerhalb der Bandbreite B vorgegeben. Insbesondere im Fall von sogenannten Schmalbandstörsignalen bewirkt eine Reduzierung der Bandbreite B, dass die Wahrscheinlichkeit P des Auftretens eines Störsignals im Nutzband sinkt gemäß:

$$P = \left( \frac{\textit{bisherige Bandbreite}}{\textit{neue Bandbreite}} \right) \cdot P_{\text{bisherige Bandbreite}} \qquad [2]$$

mit P = Wahrscheinlichkeit.

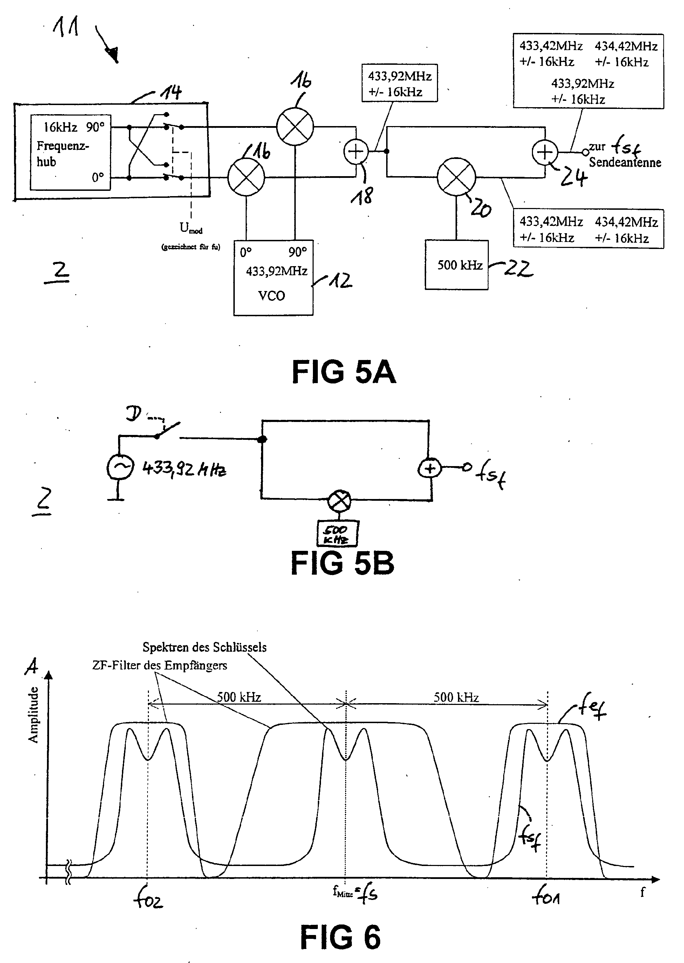

In Figur 5A ist ein für eine Mehrfachübertragung ausgebildetes Authentikationselement 2 dargestellt. Das Authentikationselement 2 oder der sogenannte Schlüssel oder Sender umfaßt zur Erzeugung eines mehrfach FSK-modulierten Signals S einen Signalgenerator 11. Der Signalgenerator 11 weist einen Oszillator 12 zur Erzeugung des Signals S mit einer Frequenz $f_{mitte}$ von 433,92 MHz (= Trägerfrequenz) auf. Dabei wird das Signal S als Zweiphasen-Signal mit einer Phasenverschiebung von 90° und 0° erzeugt. Mittels eines Frequenzumtasters 14 wird das erzeugte Signal S mit einem Frequenzhub $f_{hub}$ von +/- 16 kHz moduliert. Dazu weist der Frequenzumtaster 14 für jede Phase einen Ausgang auf. Mittels zwei Mischern 16 wird der für die jeweilige Phase erzeugte Frequenzhub $f_{hub}$ mit der betreffenden Frequenz $f_{mitte}$ von 433,92 MHz multipliziert zum einfach fsk-modulierten Signal S mit den Frequenzen:

$$f_{ma} = f_{mitte} + f_{hub} = 433,92 \text{ MHz} + 16 \text{ kHz bzw.}$$

$$f_{mb} = f_{mitte} + f_{hub} = 433,92 \text{ MHz} - 16 \text{ kHz.}$$

Zur Erzeugung einer mehrfachen FSK-Modulation werden die beiden Frequenzen fma, fmb einem Addierer 18 zugeführt. Ein daraus resultierendes erstes Summensignal $f_s = f_{mitte}$ +/- $f_{hub}$ = 433,92 MHz +/- 16 kHz wird einem weiteren Mischer 20, welcher das Summensignal $f_s$ mit einer Oszillatorfrequenz $f_o$ von 500 kHz eines weiteren Oszillators 22 mischt, und parallel dazu einem Summierer 24 zugeführt. Der Summierer 24 addiert das erste Summensignal $f_s$ mit im zweiten Mischer 20 erzeugten Frequenzen $f_{o1, o2}$ zum Sendefrequenzspektrum $f_{sf}$ gemäß:

$$f_{sf} = f_s + f_{o1} + f_{o2} =$$

$$433,92 \text{ MHz}+/-16\text{kHz} + 434,42 \text{ MHz}+/-16\text{kHz} + 433,42 \text{ MHz}+/-16\text{kHz.}$$

In der Figur 5B ist eine alternative Ausführungsform eines für eine Mehrfachübertragung ausgebildeten Authentikationselements 2 dargestellt, welcher anstelle von FSK-Modulation des Signals S eine Amplitudenmodulation ausführt. Dazu ist der Oszillator 12 zur Erzeugung des Signals S mit einer Mittenfrequenz von $f_{mitte}$ von 433,92 MHz vorgesehen. Zur Amplitudenmodulation ist ein Tastelement 25 vorgesehen. Das einfach AM-modulierte Signal wird analog zum einfach fsk-modulierten Signal dem Mischer 20 und dem Summierer 24 zur Erzeugung der weiteren Frequenzen $f_{o1}$ und $f_{o2}$ zum Sendefrequenzspektrum $f_{sf}$ zugeführt.

In Figur 6 ist beispielhaft das Sendefrequenzspektrum $f_{sf}$ des Authentikationselements 2 für die beschriebene 3-fache Übertragung der Daten D als FSK-moduliertes Signal S in einem Nutzband auf drei Frequenzen $f_s$, $f_{o1}$ und $f_{o2}$ dargestellt.

Darüber hinaus ist das zugehörige Empfangsfrequenzspektrum $f_{ef}$ des Empfängers 8 des Zugangssteuerteils 4 dargestellt.

Je nach vorgegebenen Einsatz des Fahrzeugsicherungssystems 1 kann die Trägerfrequenz $f_{mitte}$ variieren. Beispielsweise benutzen die Kommunikationskanäle 6 für die USA ein Frequenzband um 315 MHz oder alternativ um 125 kHz. Das Frequenzband um 433 MHz erlaubt dabei eine kostengünstige Realisierung von typischen Reichweiten im Bereich von ca. 1 m bis ca. 30 m. Bei Verwendung des Frequenzbands um 125 kHz läßt sich die Reichweite durch das exponentiell abfallende magnetische Feld vergleichsweise gut einstellen.

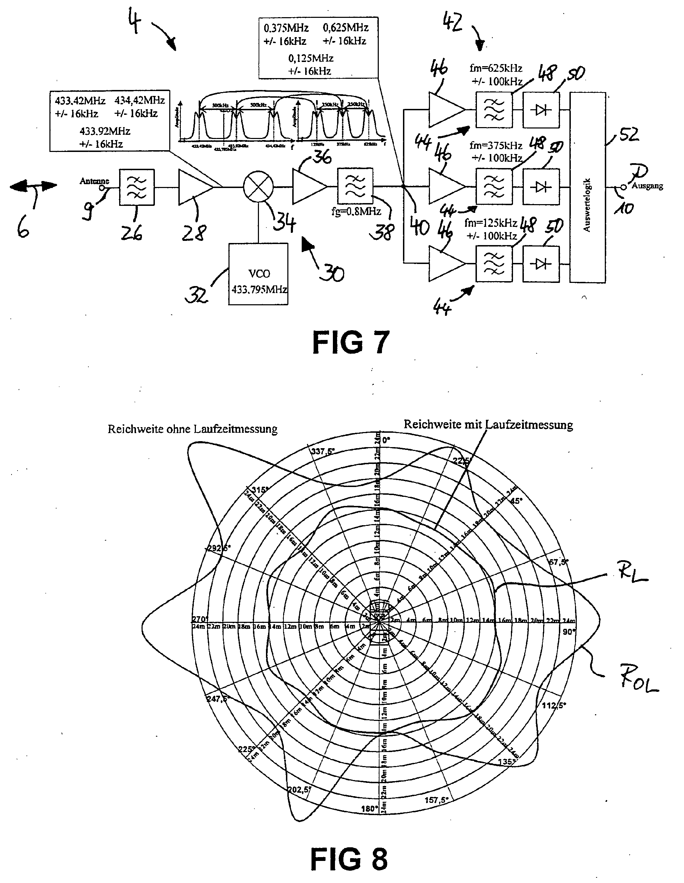

Figur 7 zeigt in schematischer Darstellung eine Ausführungsform eines Zugangssteuerteils 4 für eine Mehrfachübertragung im Kommunikationskanal 6, insbesondere für einen Empfang des in Figur 5 besschriebenen Sendefrequenzspektrums $f_{sf}$. Das mittels der Antenne 9 empfangene Frequenzspektrum $f_{ef}$ wird einem Bandfilter 26 und einem Verstärker 28 zur selektiven Verstärkung sowie einer ZF-Mischstufe 30 (ZF=Zwischenfrequenz) zur Bildung der Zwischenfrequenz $f_z$ durch Überlagerung einer Oszillatorfrequenz fo mit der Sendefrequenz $f_{sf}$ zugeführt. Die ZF-Mischstufe 30 umfaßt einen Oszillator 32 mit einer Oszillatorfrequenz von fo = 433,795 MHz, einen Mischer 34, einen Verstärker 36 und ein Filter 38. Das am Ausgangspunkt.40 der ZF-Mischstufe 30 anliegende Frequenzspektrum der Zwischenfrequenz $f_z$ umfaßt die infolge der FSK-Modulation vorhandenen Seitenbänder der Empfangsfrequenz $f_{ef}$ gemäß:

$$f_{ef} = f_{sf} = f_s +/-f_{hub} + f_{o1} +/-f_{hub} +f_{o2} +/-f_{hub} =$$

$$433,92MHz+/-16kHz + 434,42MHz+/-16kHz + 433,42MHz+/-16kHz,$$

$$f_z = f_{zs} +/-f_{hub} + f_{zo1} +/-f_{hub} + f_{zo2} +/-f_{hub} =$$

$$0,375MHz+/-16kHz + 0,625MHz+/-16kHz + 0,125MHz+/-16kHz.$$

Die Zwischenfrequenz $f_z$ wird anschließend einem Demodulator 42 zur Trennung der hochfrequenten Trägerfrequenzen der dreifachen Modulation von den datenführenden niederfrequenten Frequenzen oder Seitenbändern zugeführt. Der Demodulator 42 umfaßt für jede aus den gesendeten Frequenzen $f_s$, $f_{o1}$, $f_{o2}$ gebildete Zwischenfrequenz $f_{zs}$, $f_{zo1}$, $f_{zo2}$ einen zugehörigen Zweig 44 jeweils mit einem Verstärker 46, einem die jeweilige Frequenz betreffenden Filter 48 und einem Begrenzer 50.

Die Filter 48 weisen dabei folgende Filterfunktionen:

$$fm = 0,375MHz+/-100kHz, 0,625MHz+/-100kHz bzw. 0,125MHz+/100kHz auf.$$

Mittels einer den Zweigen 44 nachgeschalteten Auswerteeinheit 52 werden die Zwischenfrequenzen $f_{zs}$, $f_{zo1}$, $f_{zo2}$ der dreifachen Modulation auf Störsignale überprüft. Da die Daten D in allen drei Zwischenfrequenzen $f_{zs}$, $f_{zo1}$, $f_{zo2}$ enthalten sind, wird die Datenübertragung erst dann gestört, wenn alle 3 Frequenzspektren der Zwischenfrequenzen $f_{zs}$, $f_{zo1}$, $f_{zo2}$ gestört sind. Jene Daten D, die als nicht gestört bestimmt werden, werden dem Ausgang zur weiteren Verarbeitung zugeführt, wodurch ggf. eine Schließfunktion ausgeführt wird oder unterbleibt.

Durch die beschriebene redundante Datenübertragung mittels redundanten datenführenden Frequenzspektren ist eine sichere Datenübertragung auch im Fall von häufig auftretenden Störungen, insbesondere in der Bandmitte des sogenannten ISM-Bandes bei 433,92 MHz, durch andere Funkdienste ermöglicht.

Anhand der nachfolgenden Tabelle 1 wird die mittels des oben beschriebenen Verfahrens erzielte verbesserte Störfestigkeit der Datenübertragung z.B. für Funkschließungen anhand der Wahrscheinlichkeit P, dass eine der Frequenzspektren gestört ist, dargestellt.

Tabelle 1

| $P_3 = P_1 \cdot \frac{1}{7}$ | | | |
|---|---|---|---|
| $P_1$ = Wahrscheinlichkeit, dass ein Frequenzspektrum gestörtist. | | | |
| $P_3$ = Wahrscheinlichkeit, dass alle 3 Frequenzspektren gestört sind. | | | |
| $f_{zs}$  ($f_s$) | $f_{zo1}$  ($f_{o1}$) | $f_{zo2}$  ($f_{o2}$) | Nr. |
| nicht gestört    → 0 | nicht gestört    → 0 | gestört    → 1 | 1 |
| nicht gestört    → 0 | gestört    → 1 | nicht gestört    → 0 | 2 |
| nicht gestört    → 0 | gestört    → 1 | gestört    → 1 | 3 |
| gestört    → 1 | nicht gestört    → 0 | nicht gestört    → 0 | 4 |
| gestört    → 1 | nicht gestört    → 0 | gestört    → 1 | 5 |
| gestört    → 1 | gestört    → 1 | nicht gestört    → 0 | 6 |
| gestört    → 1 | gestört    → 1 | gestört    → 1 | 7 |
| ⇒ bei dreifacher Übertragung ist lediglich im Fall der Zeile 7 keine Übertragung möglich. | | | |

Je nach Art und Ausführung des Fahrzeugssicherungssystems 1 kann der Grad der Störfestigkeit der Datenübertragung durch die Anzahl der redundanten Frequenzspektren erhöht und somit die Übertragungssicherheit verbessert werden. Wie in Tabelle 1 gezeigt ist, ist selbst in dem Fall, dass die Wahrscheinlichkeit einer Störung auf allen drei Frequenzenspektren gleich groß ist, ein Gewinn an Übertragungssicherheit vom Faktor 7 gegeben.

Zusätzlich oder alternativ kann neben der redundanten Datenübertragung durch Mehrfachmodulation in einem Frequenzband, z.B. im Frequenzband von 433,92 MHz, eine Datenübertragung auf einem weiteren Frequenzband, z.B. im Frequenzband von 868 MHz erfolgen. Hierzu weist das Authentikationselement 2 zwei voneinander getrennte Antennen 9 auf. Die Antennen 9 sind für die Datenübertragung auf dem Frequenzband von 433,92 MHz durch eine magnetische Antenne und für die Datenübertragung auf dem Frequenzband 868 MHz durch eine verkürzte Dipolantenne gebildet. Alternativ kann die Antenne 9 für beide Datenübertragungen auf den verschiedenen Frequenzbändern durch zwei voneinander getrennte magnetische Antennen gebildet sein. Analog zur Mehrfachmodulation in einem Frequenzband umfaßt das Zugangssteuerteil 2 für jedes Frequenzband 433,92 MHz und 868 MHz einen zugehörigen Empfänger 8a, 8b.

Durch die parallele Nutzung von zwei Frequenzbändern wird zum einen im Fall des Frequenzbandes von 433,92 MHz eine besonders gute Rundumreichweite mit der zugehörigen Antenne 9 erzielt. Zum anderen wird im Fall des Frequenzbandes von 868 MHz bei einer geringenen Rundumreichweite eine weitgehend hohe Störfestigkeit erreicht, da dieses Frequenzband aufgrund gesetzlicher Reglementierungen deutlich weniger durch andere Funkdienste gestört wird. Somit wird bei störfreier Übertragung eine möglichst gleichmäßige Reichweite durch die Datenübertragung im Frequenzband von 433,92 MHz erzielt. Falls diese gestört ist, ist parallel dazu eine sichere Datenübertragung im Frequenzband von 868 MHz gegeben. Ist in einem Frequenzband bedingt durch einen Störer keine Datenübertragung möglich, erfolgt die Datenübertragung im zweiten Frequenzband. Mittels der Auswerteeinheit 52 wird das störungsfreie Frequenzband ermittelt und zur weiteren Verarbeitung dem Ausgang zugeführt. Darüber hinaus werden bei einer derartigen mehrbandigen Datenübertragung sogenannte Empfangslöcher infolge Mehrwegeausbreitung sicher vermieden.

Neben einer möglichst guten Störfestigkeit der Datenübertragung bedarf es einer maximalen Übertragungsempfindlichkeit. Bedingt durch eine nicht ideale Antennenposition kommt es zu einer inhomogenen Rundumcharakteristik $R_{OL}$, welche in Figur 8 dargestellt ist. Anhand einer Laufzeitmessung zwischen dem Authentikationselement 2 und dem Zugangssteuerteil 4, welche parallel zum Demodulator 42 ermittelt und mittels der Auswerteeinheit 52 bei der Verarbeitung der empfangenen Daten D berücksichtigt wird, werden die Inhomogenitäten sicher vermieden und ein hinreichend großer Kommunikationswirkbereich erzielt. Die Figur 8 zeigt dabei die jeweilige maximale Reichweite der Rundumcharakteristik $R_L$ und $R_{oL}$ mit Laufzeitmessung bzw. ohne Laufzeitmessung für die Empfangsantennen 9. Dabei entspricht die maximale Reichweite $l_{max}$ der Rundumcharakteristik $R_L$ mit Laufzeitmessung in etwa der minimalen Reichweite $l_{min}$ der Rundumcharakteristik $R_{oL}$ ohne Laufzeitmessung.

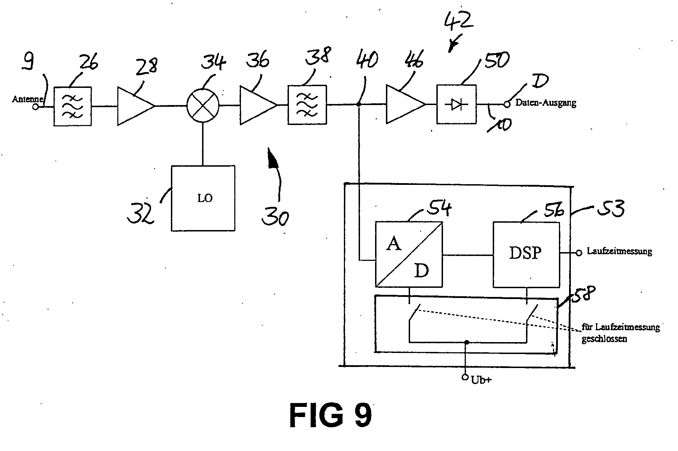

Figur 9 zeigt eine Ausführungsform für ein Zugangssteuerteil 4 mit Laufzeitmessung. Das am Ausgang 40 der ZF-Mischstufe 30 anliegende ZF-Signal $f_z$ wird zur Laufzeitmessung einem A/D-Wandler 54 und einem sogenannten DSP-Modul 56 (DSP = Digitale Signal Prozessoren) zugeführt. Das ZF-Signal $f_z$ wird mittels des A/D-Wandlers 54 digitalisiert. Üblicherweise bedarf die Laufzeitmessung einer großen Bandbreite, welche zu einer Verschlechterung der Empfindlichkeit und der Reichweite führt. Für eine möglichst maximale Übertragungsempfindlichkeit und somit für eine möglichst gute Reichweite wird das ZF-Signal $f_z$ mittels des DSP-Moduls 56 anhand einer FFT-Analyse (FFT = Fast Fourier Transformation) verarbeitet. Mittels der FFT-Analyse werden die im breitbandigen ZF-Signal gesuchten Frequenzspektren detektiert. Dabei gibt es verschiedene Möglichkeiten der Berechnung der Laufzeit mittels sogenannter FMCW (=Frequency Modulation Continuous Wave System) oder mittels Messung der Phasendifferenz zwischen gesendeten Signal und einem Soll- oder Bezugssignal, wie dies beispielsweise aus der Veröffentlichungsschrift DE 199 09 140 A1 bekannt ist.

Für ein verbrauchsorientiertes DSP-Modul 56, d.h. für einen stromreduzierten Betrieb des DSP-Moduls 56, wird dieses in Abhängigkeit von Betriebsparametern aktiviert. Beispielsweise wird das DSP-Modul 56 zur Durchführung der Laufzeitmessung in dem Fall aktiviert, wenn eine korrekte Datenübertragung für den Identifizierungscode zum Schließen übertragen wurde. Alternativ kann als Betriebsparameter ein Bussignal "CAN-Bus aktiv" das DSP-Modul 56 aktivieren. Mittels der Auswerteeinheit 52 wird bei Ermittlung einer korrekten Datenübertragung oder bei Ermittlung eines aktiven CAN-Bus mittels einer Schalteinheit 58 der A/D-Wandler 54 und das DSP-Modul 56 zur Aktivierung und somit zur Durchführung der Laufzeitmessung mit Spannung Ub versorgt. Je nach Art und Ausführung des Fahrzeugssicherungssystems 1 können andere Betriebsparameter zur Auslösung der Schalteinheit 58 führen.

Anstelle der Laufzeitmessung zur Erzielung einer homogenen Rundumcharakteristik der Empfangsantenne 9 des Zugangssteuerteils 4 können zwei Empfangsantennen 9 vorgesehen sein, welche nicht phasenstarr miteinander gekoppelt sind. Dabei wird die Auswertung mittels sogenannter Antennendiversity oder zwei unabhängigen Empfängern 8a, 8b ausgeführt. Dazu werden die beiden Empfangsantennen 9 möglichst auf gegenüberliegenden Seiten des Fahrzeugs angeordnet.

**Patentansprüche**

1. Fahrzeugsicherungssystem (1) mit einem Zugangssteuerteil (4) und mit mindestens einem Authentikationselement (2), die zum Austausch eines anhand von Frequenzumtastung modulierten Signals (S) einen Kommunikationskanal (6) aufweisen, wobei empfangsseitig mindestens zwei Empfänger (8a, 8b) zum getrennten Empfang von zwei die Frequenzumtastung repräsentierenden Frequenzen ($f_{ma}$, $f_{mb}$) des Signals (S) vorgesehen sind.

2. Fahrzeugsicherungssystem nach Anspruch 1, bei dem die beiden Empfänger (8a, 8b) zueinander spiegelsymmetrische Mittenfrequenzen ($f_{ma}$, $f_{mb}$) aufweisen.

3. Fahrzeugsicherungssystem nach Anspruch 1 oder 2, bei dem die beiden Frequenzen zur Trägerfrequenz einen Frequenzhub von mindestens +10 kHz bzw. -10 kHz aufweisen.

4. Fahrzeugsicherungssystem nach einem der Ansprüche 1 bis 3, bei dem sendeseitig ein Signalgenerator (11) zur mehrfachen FSK-Modulation des Signals (S) vorgesehen ist.

5. Fahrzeugsicherungssystem nach Anspruch 4, bei dem sendeseitig der Signalgenerator (11) das Signal (S) in einem Frequenzband mehrfach erzeugt.

6. Fahrzeugsicherungssystem nach Anspruch 4, bei dem sendeseitig der Signalgenerator (11) das Signal (S) in mehreren Frequenzbändern mehrfach erzeugt.

7. Fahrzeugsicherungssystem nach einem der vorhergehenden Ansprüche, bei dem der Signalgenerator (11) einen Frequenzumtaster (14) und mindestens zwei Frequenzmischer (16) umfasst.

8. Fahrzeugsicherungssystem nach einem der Ansprüche 1 bis 7, bei dem empfangsseitig eine der Anzahl der FSK-Modulationen des Signals (S) entsprechende Anzahl von Demodulatoren (42) vorgesehen sind.

9. Fahrzeugsicherungssystem nach einem der Ansprüche 1 bis 8, bei dem empfangsseitig ein Mittel (53) zur Laufzeitmessung vorgesehen ist.

10. Fahrzeugsicherungssystem nach einem der Ansprüche 1 bis 9, bei dem empfangsseitig zwei Antennen (9) vorgesehen sind.

**FIG 1**

**FIG 2**

D

FIG3A

F

FIG3B

Da (8a)

für $f_{mitte}+f_{hub}$

FIG3C

Da (8b)

für $f_{mitte}-f_{hub}$

FIG3D

**FIG 3**

A

$F_{Sf}$

$f_{02}$
$= 433,42\ MHz\ +/-16kHz$

$f_{Mitte} = f_S$
$= 433,92\ MHz\ +/-16kHz$

$f_{01} =$
$= 434,42\ MHz\ +/-16kHz$

f

**FIG 4**

*11*

*14*

*16*

433,92MHz
+/- 16kHz

433,42MHz   434,42MHz
+/- 16kHz    +/- 16kHz

433,92MHz
+/- 16kHz

| 16kHz  90° |
|---|
| Frequenz-hub |
| 0° |

*16*

zur *fsf*
Sendeantenne

*24*

U$_{mod}$

(gezeichnet für fu)

*2*

| 0°      90° |
|---|
| 433,92MHz |
| VCO |

*12*

*18*

*20*

500 kHz

*22*

433,42MHz   434,42MHz
+/- 16kHz    +/- 16kHz

## FIG 5A

$\mathcal{D}$

433,92 MHz

*fsf*

*2*

500
kHz

## FIG 5B

Spektren des Schlüssels

ZF-Filter des Empfängers

500 kHz

500 kHz

*fef*

*A*

Amplitude

*fsf*

*fo2*

f$_{Mitte}$ = *fs*

*fo1*

f

## FIG 6

**FIG 7**

**FIG 8**

**FIG 9**